# EUROPEAN PATENT SPECIFICATION

(11) **EP 2 400 718 B1**
(45) Date of publication and mention of the grant of the patent: **19.08.2015**
(21) Application number: 10167178.2
(22) Date of filing: 24.06.2010
(51) Int. Cl.: H04L 29/08

(54) **Managing presence history in communications system**
Verwaltung von Präsenzhistorien in einem Kommunikationssystem
Gestion de l'historique de présence dans un système de communication

(43) Date of publication of application: 28.12.2011
(73) Proprietor: TeliaSonera AB, 10663 Stockholm (SE)
(72) Inventor: Järvenpää, Marko, 05460, Hyvinkää (FI); Tuomela, Frans, 00640, Helsinki (FI)
(74) Representative: Kolster Oy Ab

(56) References cited:
- EP-A1- 1 835 665
- EP-A1- 2 129 081
- WO-A1-2008/041829
- URPALAINEN: "An Extensible Markup Language (XML) Configuration Access Protocol (XCAP) Diff Event Package; rfc5875.txt" IETF STANDARD, INTERNET ENGINEERING TASK FORCE, IETF, CH, 1 May 2010 (2010-05-01), XP002596679
- BURGER E ET AL: "A Mechanism for Content Indirection in Session Initiation Protocol (SIP) Messages; rfc4483.txt" IETF STANDARD, INTERNET ENGINEERING TASK FORCE, IETF, CH, 1 May 2006 (2006-05-01), XP015054990 ISSN: 0000-0003

## Description

### FIELD OF THE INVENTION

The exemplary and non-limiting embodiments of the invention relate generally to communication systems and more specifically to the provision of a presence service to a user terminal.

### BACKGROUND OF THE INVENTION

Presence services provide a status text/note field that a user of a user terminal may use to type in free presence status text that describes his/her feeling, mood or current event. Another option is that the user has a status picture/icon in the presence information. When a user of a user terminal changes the presence status text or the presence status picture, a comment button or the like may appear on the display of the user's friend's terminal. When the user's friend presses the button with his/her user equipment, the presence status text/picture of the user may then be shared by the user's friends and shown in a user interface.

A problem associated with the above arrangement is that, in current systems, only the latest presence status text/picture can be shared by the user's friends.

WO 2008/041829 A1 discloses a method for managing history information of an XDM server history. If a user wants to create or update a XML document, s/he sends a XCAP PUT operation and includes the XML content in the body of a request to the XDM server. The user may also perform searching and retrieving the history information.

Urpalainen: "An extendable markup language (XML) configuration access protocol (XCAP) diff event package; rfc5875.txt" IETF standard, Internet engineering task force, IETF, CH, 1.5.2010, XP002596679, relates to XML configuration access protocol (XCAP). An XCAP diff format together with SIP event notification framework, allows a user to subscribe to changes in an XML document and to receive notifications whenever the XML document changes. The subscriber uses HTTP to retrieve the updated document. A notifier sends a first notification in response to the subscription, the first notification containing URLs of the documents and XCAP component contents that are part of the subscription. An xcap-patching mode provides intermediate states of version history. The client receives the full HTTP ETag history of the document.

### BRIEF DESCRIPTION OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention is directed to subject-matter as disclosed by the appended claims.

The present solution enables the user of the second user terminal to see previous (earlier) presence statuses of the user of the first user terminal, in addition to the current (latest) presence status of the user of the first user terminal, thus allowing a more advanced utilization of social presence information (SPI).

### BRIEF DESCRIPTION OF THE DRAWINGS

In the following the invention will be described in greater detail by means of preferred embodiments with reference to the attached drawings, in which
Figure 1 illustrates a communications system according to an exemplary embodiment;
Figure 2 illustrates signalling according to an exemplary embodiment;
Figure 3 illustrates signalling according to an exemplary embodiment;
Figure 4 is a flow chart illustrating the operation of a network apparatus according to an exemplary embodiment;
Figure 5 is a flow chart illustrating the operation of a user terminal according to an exemplary embodiment;
Figure 6 is a flow chart illustrating the operation of a presence server according to an exemplary embodiment.

### DETAILED DESCRIPTION OF THE INVENTION

IP multimedia subsystem (IMS) refers to a communications network subsystem providing IP multimedia services that complement the services provided by a circuit switched core network domain. IMS enables PLMN operators to offer their subscribers multimedia services based on and built upon Internet applications, services and protocols.

The rich communication suite (RCS) uses IMS (IP multimedia subsystem) for providing mobile phone communication services. Rich communication enables the use of more than just voice communication. From the end- user point of view, RCS enables communication such as instant messaging, video sharing and/or buddy lists. These capabilities may be available on any type of user devices using open communication between devices and networks. RCS may involve features such as an enhanced phonebook with service capabilities and presence enhanced contacts information, enhanced messaging which enables a large variety of messaging options including chat and messaging history, enriched call which enables multimedia content sharing during a voice call, and/or a "see what I see" capability. Following services may be included in the RCS concept: presence, voice call, IM (instant messaging), video share, image share, SMS (short message service), MMS (multimedia messaging service). Some of the capabilities of RCS are also available from Internet service providers. Therefore, the present solution is not limited to the rich communication environment. Instead the present solution is applicable in any type of enhanced communication system. For example, the multimedia messaging service refers to a messaging service for sending and receiving multimedia messages. MMS combines conventional text messages with other ("richer") content types, such as photographs, images, voice clips, and video clips. MMS is used with multimedia terminals, e.g. WAP (wireless application protocol) clients, which are able to receive and process multimedia messages.

The present solution involves that popular social networking internet services provide an electronic notification stream or feed that basically forms a history of the user's actions in the service. The notifications may comprise user events like entering a status text like "today I ate some Chinese and boy was that good", or adding a new picture to the service. By means of the present solution, the user's friends are able to see the user's profile together with history data on the user's earlier actions (earlier notifications etc.) in the presence service.

Rich communication suite (RCS) refers to a GSMA program providing so called social presence information (SPI) that is made out of elements like the user's status text, profile picture, and favourite links. The presence functionality in RCS is based on an IMS presence functionality defined by IETF (SIMPLE) and OMA (OMA presence SIMPLE), but the current standards and specifications do not acknowledge such a functionality to be used.

The present solution defines how shared presence notification history may be technically implemented in an IMS system/network/server. The present solution defines a mechanism of how social presence information (SPI) notification feed for a user is defined in an IMS/RCS environment so that the feed may be shared with the other users.

The present solution defines functionality to the presence server (a logical element) or to a separate entity that stores the user's presence updates to a database, thus creating a notification history. The present solution further defines a mechanism that allows the history information to be shared with other users/friends.

The present solution is implemented such that there is provided a mechanism for capturing the user's updates to his/her SPI (i.e. changing the status text or profile picture). This mechanism may be part of the presence server or a separate entity (including an interface between the presence server and the entity) in the originating side. The mechanism is arranged to capture each update and store the captured updates into a database.

The system also has a mechanism for letting the devices/clients in the system to read data from the database. This may be implemented with HTTP and XML, for example. For example, the feed may be read as an RSS feed, including a mechanism for privacy, i.e. for letting the user to authorize the access to the presence history information.

There is also provided a mechanism for the system to advertise the feed in the user's presence information. The system may add a new element to the user's presence document or use existing link or web page elements defined in IETF and OMA.

The user's user equipment may fetch the friends' notification history either automatically every time the history is updated and the user equipment is registered to the network, or when needed, for example, when the user opens up the friend's contact card in the user equipment. The network could also maintain a timestamp when advertising the feed in the user's presence information in order for the user equipment not to fetch the feed if it has not changed in the network.

In the following, different embodiments will be described using as an example of a system architecture whereto the embodiments may be applied, an architecture based on an evolved UMTS terrestrial radio access network of an enhanced cellular network (E-UTRAN). Although E-UTRAN is discussed as a primary example herein, the present solution is not limited to E-UTRAN, LTE, and/or 3GPP systems. Thus, the present solution may also be applicable to other communications systems such as WiMAX (worldwide interoperability for microwave access), HSDPA (high-speed downlink packet access), HSUPA (high-speed uplink packet access), and/or WLAN (wireless local area network).

Exemplary embodiments of the present solution will now be described more fully hereinafter with reference to the accompanying drawings, in which some, but not all embodiments of the solution are shown. Indeed, the solution may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present solution is applicable to any user terminal, server, corresponding component, and/or to any communication system or any combination of different communication systems that support the utilization of presence services. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

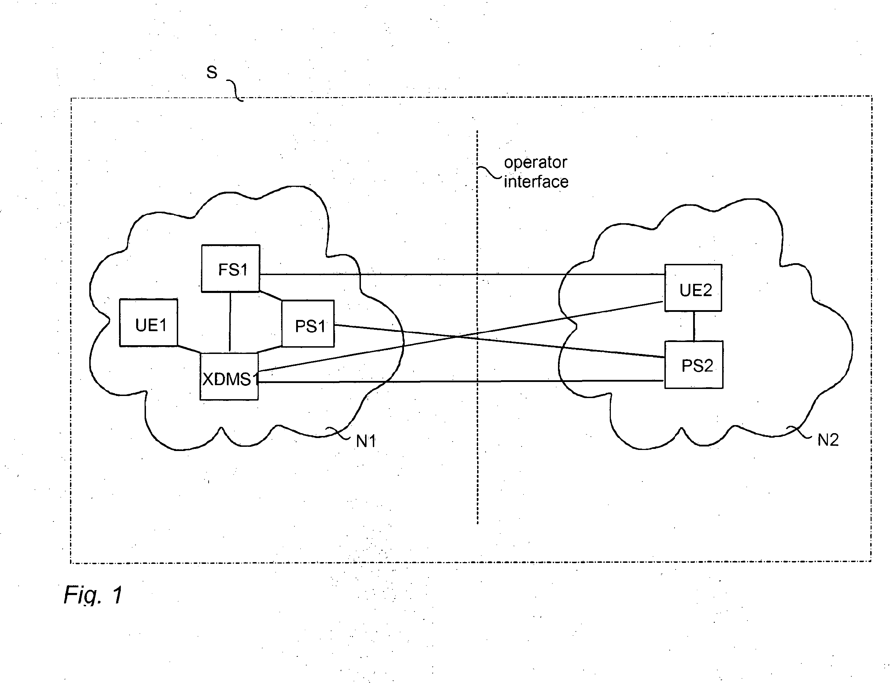

A general architecture of a communication system according to exemplary embodiments of the present solution is illustrated in Figure 1. Figure 1 is a simplified system architectures only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for a presence service, are irrelevant to the actual invention. Therefore, they need not to be discussed in more detail here.

Figure 1 provides an example of an environment where the present solution may be used. Referring to Figure 1, a communications system S according to an exemplary embodiment of the present solution comprises a user equipment UE1, UE2 that may be e.g. a mobile or wireless user terminal, such as a mobile phone (mobile station), a personal digital assistant (PDA), a game console, a smart phone, a personal computer (PC), a laptop, a desktop computer or the like, capable of processing presence data. The system S further comprises a core network element PS1, PS2, such as a presence server or any other core network element capable of handling presence data. A first presence server PS1 of a first operator network N1 is operatively connected to a second presence server PS2 of a second operator network N2. A first feed server FS1, located in N1, is operatively connected to an XML document management system XDMS1, located in N1. In the example shown in Figure 1, a first user terminal UE1 ("watcher") belongs to a first user ("user A") and is capable of connecting to the first operator network N1, and a second user terminal UE2 belongs to a second user ("user B") and is capable of connecting to the second operator network N2. UE1 and UE2 are able to communicate to each other via one more network nodes PS1, PS2, FS1, XDMS1.

Figure 1 shows a simplified version of an evolved UMTS (universal mobile telecommunications system) terrestrial radio access network structure, which only illustrates the components that are essential to illustrate the present solution, even though those skilled in the art naturally know that a general communications system also comprises other functions and structures, which do not have to be described in more detail herein. The network element PS1, PS2, FS1, XDMS1 may include any network element operated by a network operator in a cellular, wireless and/or fixed network, such as a mobile switching centre, SGSN, GGSN, VLR, HLR, HSS, base station, access point, radio network controller, database, and/or a network computer or server. Although each network element UE1, UE2, PS1, PS2, FS1, XDMS1, N1, N2 has been depicted as one entity, different modules and memory may be implemented in one or more physical or logical entities. A general architecture of a communication system providing session-based communication is illustrated in Figure 1. It is apparent to a person skilled in the art that the systems also comprise other functions and structures. It should be appreciated that the functions, structures, elements and the protocols used in or for session-based communication are irrelevant to the actual invention. Therefore, they need not be discussed in more detail here.

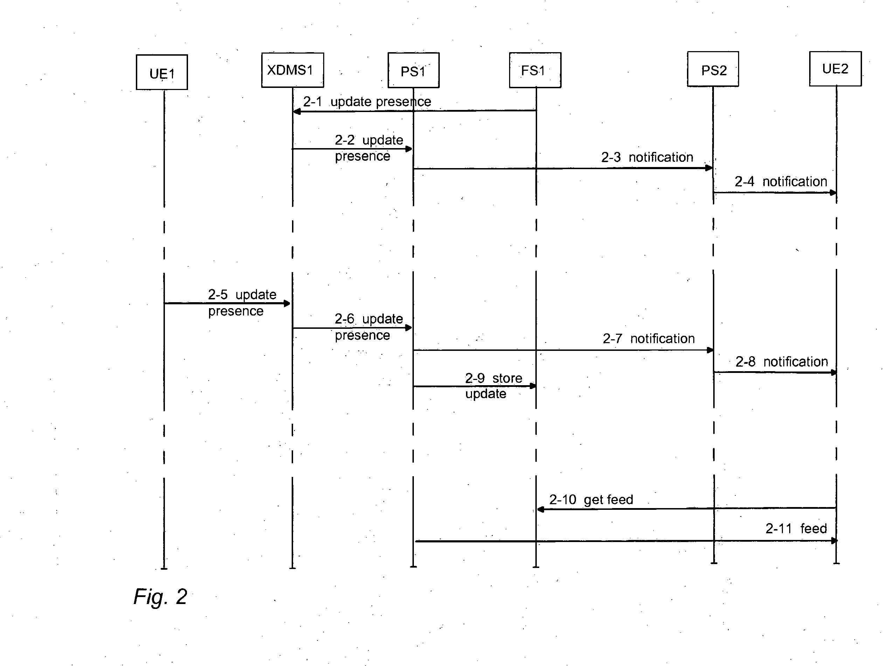

Figure 2 illustrates signalling between network elements according to a first exemplary embodiment of the present solution. Figure 2 depicts the signalling how the present solution may be implemented in an IP multimedia subsystem IMS. Referring to Figure 2, user A and user B are friends, i.e. user A and user B are able to see each others' presence information by using a presence service application in respective user terminal's UE1, UE2. A feed server FS1 is configured to create and maintain a unified resource identifier URI for a first user terminal UE1 (the user terminal of user A), thus creating presence history data for UE1. By default user A's history feed (i.e. the history data (which may also be referred to as "a history list")) may be empty. The feed server FS1 has access to a XML document management system XDMS1, located in a first operator network N1. The feed server FS1 is configured to transmit a link to user A's presence history information by transmitting an update presence message 2-1 to XDMS1, the update presence message being forwarded 2-2 by XDMS1 to a first presence server PS1 and including the URI for a first user terminal UE1. Thus the unified resource identifier URI maintained in the feed server FS1 for a first user terminal UE1 is added to the user A's presence document in PS1. Based on the update presence message 2-2 the first presence server PS1 is configured to advertise 2-3, 2-4 to user A's friends (e.g. to user B) that user A has a history feed. The advertising may involve e.g. the first presence server PS1 transmitting a respective notification message 2-3, 2-4 via the second presence server PS2 to a second user terminal UE2 (i.e. user B's terminal), the notification including the URI for the first user terminal UE1. User A may update his/her presence information by, for example, changing his/her status text. User A's presence status is updated by transmitting a respective update presence message 2-5 from the first terminal UE1 (i.e. user A's terminal) to XDMS1. XDMS1 forwards 2-6 the update presence message to the first presence server PS1, wherein PS1 is configured to inform user A's friends (e.g. user B) on the update by transmitting a respective notification message 2-7, 2-8 via a second presence server PS2 to the second user terminal UE2. The first presence server PS1 is configured to transmit a store update message 2-9 to the feed server FS1, wherein information on the update of the user A's presence status is stored in the feed server FS1 (i.e. added to the history data of UE1/user A). User B may decide to check user A's history feed, wherein UE2 is configured to fetch 2-10, 2-11 (in response UE2 recognizing an action carried out by user B (e.g. user B pressing a specified button or typing specified text on UE2)) the history feed of user A from the feed server FS1, for example, by getting the URL from the user A's presence information (e.g. based on URI received in message 2-4) and by performing a HTTP GET by messages 2-10, 2-11 to the feed server FS1 (i.e. to the URL).

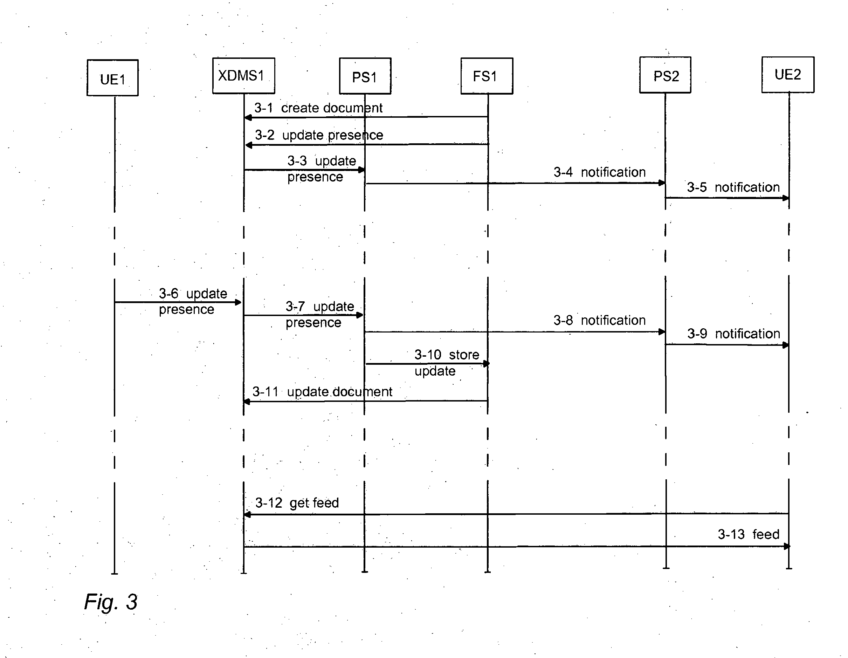

Figure 3 illustrates signalling between network elements according to a second exemplary embodiment of the present solution. Figure 2 depicts the signalling how the present solution may be implemented in an IP multimedia subsystem IMS. Referring to Figure 3, if there needs to be an authorization for history feed data, a feed server FS1 is configured to maintain a read-only page in a content XDMS (i.e. XDMS1) for the first user terminal UE1. The perquisite for the second exemplary embodiment is that user A and user B are friends, i.e. the content XDMS1 uses a same authorization mechanism as a first presence server PS1 (e.g. as specified in OMA presence SIMPLE 1.0). As a difference to the first exemplary embodiment, the feed server FS1 in the second exemplary embodiment may first create an empty XML document to the content XDMS1. In order to do that, FS1 is configured to transmit a create document message 3-1 to XML document management server XDMS1. Then, instead of setting the feed server's FS1 address to user A's presence document, the unified resource locator URL of the XML document (in the content XDMS1) is inserted to the user A's presence document (in PS1) by transmitting an update presence message 3-2 from the feed server FS1 to XDMS1 and by forwarding 3-3 the update presence message from XDMS1 to the first presence server PS1. The update presence message 3-2, 3-3 includes the URL of the XML document for the first user terminal UE1. Based on that, the first presence server PS1 is configured to advertise 3-4, 3-5 to user A's friends (e.g. to user B) that user A has a history feed (i.e. history data (which may also be referred to as "a history list")). The advertising may involve e.g. the first presence server PS1 transmitting a respective notification message 2-3, 2-4 via the second presence server PS2 to the second user terminal UE2 (i.e. user B's terminal), the notification including the URL of the XML document for the first user terminal UE1. By default user A's history feed may be empty. User A may update his/her presence information by, for example, changing his/her status text. User A's presence status is updated by transmitting a respective update presence message 3-6 from the first terminal UE1 (i.e. user A's terminal) to XDMS1. XDMS1 forwards 3-7 the update message to the first presence server PS1. PS1 informs user A's friends (in this case user B) on the update by transmitting a respective notification message 3-8, 3-9 via the second presence server PS2 to the second user terminal UE2. The first presence server PS1 is configured to transmit a store update message 3-10 to the feed server FS1, wherein information on the update is stored in the feed server FS1. In the second exemplary embodiment, the feed server FS1 is configured to update the XML document in XDMS1 (i.e. add information on the latest update to the history list of UE1/user A) by transmitting an update document message 3-11 to XDMS1. Then, user B may check user A's history feed, wherein UE2 is configured to fetch 3-12, 2-13 (in response UE2 recognizing an action carried out by user B (e.g. user B pressing a specified button or typing specified text on UE2)) the history feed from XDMS1, for example, by getting the URL from the user A's presence information and by performing a HTTP GET by messages 3-12, 3-13 to XDMS1 (i.e. to the URL).

It is up to the configuration of UE2 to decide how to use the feed 2-11/3-13 received from FS1/XDMS1. UE2 may, for example, when started and receiving the initial presence notification 2-3/3-4 from the network make a fetch to all of the user's friends feeds in order to build a mixed view from all of the updates of the friends; showing one or more latest updates from the friends organized e.g. according to a time line. Another option is that the terminating network N2 has a master feed server (not shown in Figures 2 or 3) that has access to the user's presence information, to fetch addresses for the history feeds of the friends, acting as a user equipment and fetching the history feeds from the feed servers, and providing the mixed view to the user equipments.

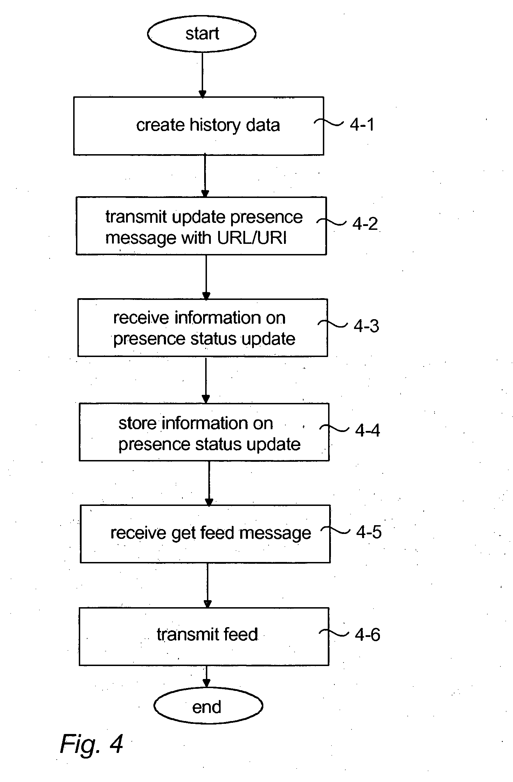

Figure 4 is a flow chart illustrating the operation of an apparatus according to an exemplary embodiment of the present solution. Referring to Figure 4, in the first exemplary embodiment the apparatus (e.g. a feed server FS1) is configured to create and maintain 4-1 a unified resource identifier URI for a first user terminal UE1 (the user terminal of user A), thus creating presence history data for UE1. The feed server FS1 is configured to transmit a link to user A's presence information by transmitting 4-2 an update presence message to XDMS1, the update presence message notification including the URI for the first user terminal UE1. The feed server FS1 is configured to receive 4-3 from a first presence server PS1 a store update message, wherein information on the update of the user A's presence status is stored 4-4 in the feed server FS1 (i.e. added to the history data of UE1/user A). Based on receiving 4-5 a HTTP GET message from the second user terminal UE2, the feed server FS1 is configured to provide 4-6 user A's history feed to UE2.

Further referring to Figure 4, in a second exemplary embodiment, if there needs to be an authorization for history feed data, the apparatus (e.g. an XML document management server XDMS1) is configured to maintain a read-only page for the first user terminal UE1. An empty XML document is created 4-1 in XDMS1. To do that, XDMS1 is configured to receive a create document message from a feed server FS1. Then, a unified resource locator URL of the XML document is inserted to the user A's presence document (in PS1) such that an update presence message is received from the feed server FS1 and forwarded 4-2 to the first presence server PS1. The update presence message includes the URL of the XML document for the first user terminal UE1. User A's presence status may be updated, wherein XDMS1 is configured to receive 4-3 a respective update presence message from the first terminal UE1 (i.e. user A's terminal). In the second exemplary embodiment, XDMS1 forwards 4-3 the update message to the first presence server PS1, and the XML document is updated in XDMS1 in response to receiving 4-4 an update document message from FS1. Thus XDMS1 stores 4-4 the presence history data for UE1 in the XML document (i.e. adds information on the latest update to the history list). Based on receiving 4-5 a HTTP GET message from the second user terminal UE2, the feed server FS1 is configured to provide 4-6 user A's history feed to UE2.

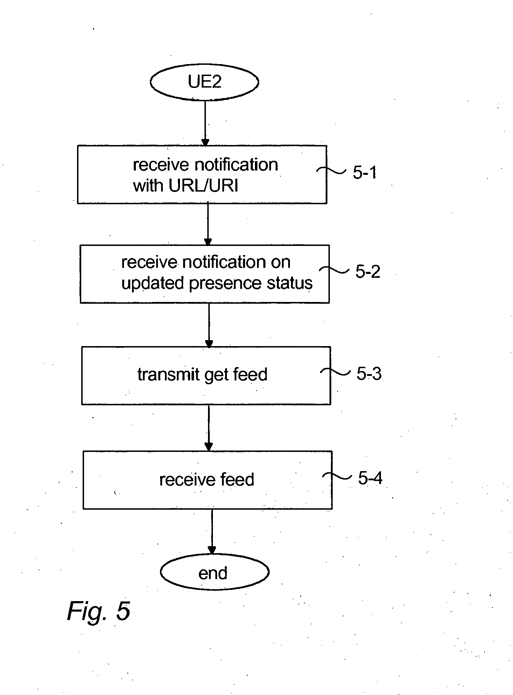

Figure 5 is a flow chart illustrating the operation of a terminal apparatus according to an exemplary embodiment of the present solution. Referring to Figure 4, in an exemplary embodiment the terminal apparatus (e.g. a second user terminal UE2) is configured to receive 5-1 a notification message transmitted from the first presence server PS1 via the second presence server PS2 to the second user terminal UE2 (i.e. user B's terminal), the notification including the URI (or the URL) for a first user terminal UE1 and advertising to user A's friends (e.g. to user B) that user A has a history feed. User A may update his/her presence information by, for example, changing his/her status text. Thus UE2 is configured to receive 5-2 a respective notification message transmitted from PS1 via PS2 to the second user terminal UE2. User B may decide to check user A's history feed, wherein UE2 is configured to fetch (in response UE2 recognizing an action carried out by user B (e.g. user B pressing a specified button or typing specified text on UE2)) the history feed of user A from the feed server FS1 (the XML document management server XDMS1) based on the URI (or the URL) and by transmitting 5-3 a HTTP GET message to the feed server FS1 (i.e. to the URL), and by receiving 5-4 the respective history feed from FS1.

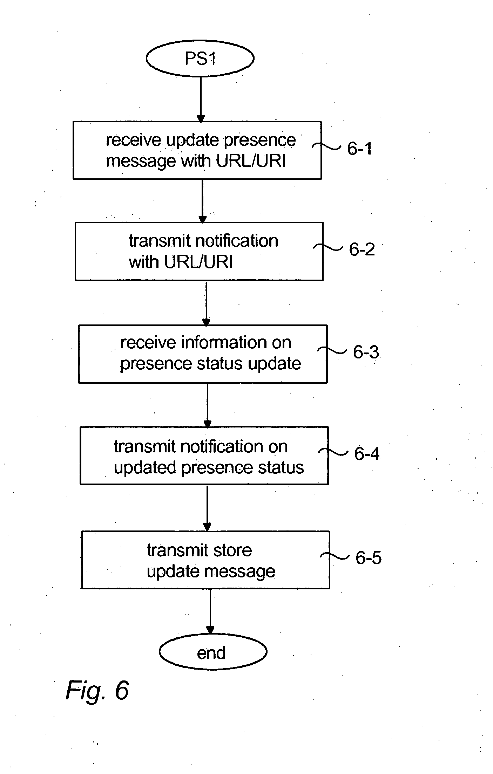

Figure 6 is a flow chart illustrating the operation of a server apparatus according to an exemplary embodiment of the present solution. Referring to Figure 4, in a first exemplary embodiment, the server apparatus (e.g. a first presence server PS1) is configured to receive 6-1 a link to user A's presence history information by receiving an update presence message from XDMS1, the message including the URI for a first user terminal UE1. Thus the unified resource identifier URI maintained in a feed server FS1 for a first user terminal UE1 is added 6-1 to the user A's presence document in PS1. Based on the update presence message the first presence server PS1 is configured to advertise 6-2 to user A's friends (e.g. to user B) that user A has a history feed. The advertising may involve e.g. the first presence server PS1 transmitting 6-2 a respective notification message via the second presence server PS2 to a second user terminal UE2 (i.e. user B's terminal), the notification including the URI for the first user terminal UE1. User A may update his/her presence information by, for example, changing his/her status text. User A's presence status is updated by receiving 6-3 a respective update presence message from XDMS1, wherein PS1 is configured to inform user A's friends (e.g. user B) on the update by transmitting 6-4 a respective notification message via a second presence server PS2 to the second user terminal UE2. The first presence server PS1 is configured to transmit 6-5 a store update message to the feed server FS1 in order information on the update to be stored in the presence history data maintained in FS1.

Further referring to Figure 6, in a second exemplary embodiment, if there needs to be an authorization for history feed data, the server apparatus (e.g. a first presence server PS1) is configured to insert, in response to receiving an update presence message from the feed server FS1 via XDMS1, a unified resource locator URL of an XML document stored in XDMS1, to the user A's presence document. The update presence message includes the URL of the XML document for the first user terminal UE1. Based on that, the first presence server PS1 is configured to advertise to user A's friends (e.g. to user B) that user A has a history feed. The advertising may involve e.g. the first presence server PS1 transmitting a respective notification message via a second presence server PS2 to the second user terminal UE2 (i.e. user B's terminal), the notification including the URL of the XML document for the first user terminal UE1. User A may update his/her presence information by, for example, changing his/her status text. User A's presence status is updated by receiving a respective update presence message from XDMS1. PS1 informs user A's friends (in this case user B) on the update by transmitting a respective notification message via the second presence server PS2 to the second user terminal UE2. The first presence server PS1 is configured to transmit a store update message 3-10 to the feed server FS1 in order information on the update to be stored in the feed server FS1 (and in order the XML document to be updated in XDMS1).

In an embodiment, the first user terminal and the network apparatus (FS1 or XDMS1) are linked to each other on the basis of the corresponding URI and/or URL (so that the first user terminal and the network apparatus to which the presence history of the first user terminal is stored can be identified on the basis of the corresponding URI and/or URL).

In an embodiment, a command element may be displayed on the display of the first user terminal UE1, allowing user A is able to insert free presence status text or select a predefined presence comment.

In an embodiment, a command element may be displayed on the display of the second user terminal UE2, allowing user B is able to select/see user A's presence history on the display.

In an embodiment, the command element may comprise e.g. a virtual command button and/or command prompt.

In an embodiment, there is provided means for user A to obtain his/her feed URI, and send the URI via IM, SMS, or email to his/her friends (instead of or in addition to the presence server transmitting the URI in the notification message 2-3, 2-4 to UE2). In this case, the URI may be provided to user A by transmitting the URI maintained for the first user terminal from XDMS1, PS1, and/or FS1 to UE1.

In an embodiment, the present solution enables maintaining presence history data for the first user terminal, said data comprising information on latest presence status of the first user terminal and information on one or more previous presence statuses of the user terminal, and storing presence status information on a first user terminal on said data.

In an embodiment, the present solution enables storing information on the time of the update of the presence status (text/icon) of the first user terminal and/or providing information on the time of the update to the second user terminal.

In an embodiment, the present solution enables the second user terminal retrieve information on earlier presence status texts of the first user terminal. This is advantageous, for example, in a situation where the latest presence text is not the one that most interests the user of the second user terminal (instead an earlier presence status text/icon/link may be more relevant to the user of the second user terminal).

In an embodiment, the unified resource identifier URI refers to a character string (e.g. an IP address, XML address, DNS address) that indicates the resource of the presence history data in the system.

In an embodiment, the unified resource locator URL refers to a unified resource identifier URI that indicates the location (a network path) of the presence history data in the internet.

In an embodiment, FS1 (or XDMS1) may be configured to provide and/or UE2 may be configured to retrieve only a part of the history data on UE1. A predetermined number of latest history data updates (e.g. five) may be retrievable/provided. The number of provided/retrieved history data items may also be selectable by the user of UE2. UE2 may also be able to retrieve history data items that are related to a certain topic (e.g. notifications that include a word "party").

The steps/points, signalling messages and related functions described above in Figures 1 to 6 are in no absolute chronological order, and some of the steps/points may be performed simultaneously or in an order differing from the given one. Other functions can also be executed between the steps/points or within the steps/points and other signalling messages sent between the illustrated messages. Some of the steps/points or part of the steps/points can also be left out or replaced by a corresponding step/point or part of the step/point. The operations to be executed illustrate a procedure that may be implemented in one or more physical or logical entities. The signalling messages are only exemplary and may even comprise several separate messages for transmitting the same information. In addition, the messages may also contain other information.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

User terminal (user equipment) may refer to any user communication device. A term "user equipment" as used herein may refer to any device having a communication capability, such as a wireless mobile terminal, a PDA, a smart phone, a personal computer (PC), a laptop computer, a desktop computer, etc. For example, the wireless communication terminal may be an UMTS or GSM/EDGE smart mobile terminal. Thus, the application capabilities of the device according to various embodiments of the invention may include native applications available in the terminal, or subsequently installed applications. The network apparatus may be implemented in any network element, such as a server.

An apparatus capable of performing operation according to various embodiments of the present solution may refer to any communication entity, such as the network apparatus, database or the user terminal. The apparatus may generally include a processor, controller, or the like connected to or comprising a memory. The memory may include volatile and/or non-volatile memory and typically stores content, data, or the like. For example, the memory may store computer program code such as software applications or operating systems, information, data, content, or the like for a processor to perform steps associated with operation of the entity in accordance with embodiments of the present invention. Also, for example, the memory typically stores content transmitted from, or received by, the apparatus. Memory may be, for example, random access memory (RAM), a hard drive, or other fixed data memory or storage device. The processor may receive input from an input device and may display information on a display. The processor may also be connected to at least one communication interface or other means for transmitting and/or receiving data, content, messages, or the like. Where the apparatus provides wireless communication, such as in a UMTS, GSM, EDGE, WCDMA network, Bluetooth network, a wireless LAN network, or other mobile network, the processor may operate with a wireless communication subsystem of the interface. Where the apparatus provides an IP server with IP communication, the processor may operate with an IP communication system of the interface. One or more processors, memory, storage devices, and other computer elements may be used in common by a computer system and subsystems, as part of the same platform, or processors may be distributed between a computer system and subsystems, as parts of multiple platforms. If the apparatus is, for example, a mobile station or a network server, the apparatus may also include modules such as a messaging service client/server and/or an application associated with the processor. These modules may be software and/or software-hardware components. For example, a messaging service client/server may include software capable of establishing, modifying, and terminating messaging sessions, to send and receive messages, etc. The apparatus may generally include a processor, controller, control unit or the like connected to a memory and to various interfaces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment. An interface provides a transmitter and/or a receiver or a corresponding means for receiving and/or transmitting data, content, messages including the above described advertisements, responses and solicitation messages.

At least some embodiments or aspects described herein may be implemented using programming stored within an appropriate storage circuitry described above or communicated via a network or other transmission media and configured to control appropriate processing circuitry. For example, programming may be provided via appropriate media including, for example, embodied within articles of manufacture, embodied within a data signal (e.g., modulated carrier wave, data packets, digital representations, etc.) communicated via an appropriate transmission medium, such as a communication network (e.g., the Internet or a private network), wired electrical connection, optical connection or electromagnetic energy, for example, via communications interface, or provided using other appropriate communication structure or medium. Exemplary programming including processor-usable code may be communicated as a data signal embodied in a carrier wave in but one example.

It will be obvious to a person skilled in the art that, as the technology advances, the inventive concept can be implemented in various ways. The invention and its embodiments are not limited to the examples described above but may vary within the scope of the claims.

### Data of abbreviations

RCS - Rich communication suite,
SPI - Social presence information,
IMS - IP multimedia subsystem,
IP - Internet protocol,
IETF - Internet engineering task force,
OMA - Open mobile alliance,
PLMN - Public land mobile network
HTTP - Hypertext transfer protocol,
XML - Extensible mark-up language,
RSS - Really simple syndication??,
CAB - Converged address book,
NAB - Network address book,
XDMS - XML document management system/server,
URI - Uniform resource identifier,
IM - Instant messaging,
SMS - Short message service,
URL - Uniform resource locator.

## Claims

1. A method of maintaining presence information on the user of a first user terminal (UE1) in a communications system (S) comprising a network apparatus (FS1), **characterized by**
maintaining (4-1), in the network apparatus (FS1), presence status history data for the first user terminal (UE1);
in response to receiving (4-3), in the network apparatus (FS1) from a first presence server (PS1), information on updating of the presence status of the first user terminal (UE1), storing (4-4) information on the updated presence status to the presence status history data maintained in the network apparatus (FS1) for the first user terminal (UE1);
receiving (4-5), in the network apparatus (FS1) from a second user terminal (UE2), a get feed message requesting information on the presence history of the first user terminal (UE1), the get feed message having been transmitted from the second user terminal based on a notification message transmitted from the first presence server (PS1) for informing the second user terminal (UE2) that presence status history data on the first user terminal (UE1) is available to be fetched by the second user terminal (UE2) from the network apparatus (FS1), the get feed message requesting information on history data items related to a certain topic.

2. A method as claimed in claim 1, **characterized in that** it comprises
creating and maintaining, in the network apparatus (FS1), a unified resource identifier URI for the first user terminal (UE1); and
adding the unified resource identifier URI maintained for the first user terminal (UE1) to a first user terminal's presence document by transmitting a update presence message (4-2) from the network apparatus (FS1) to the first presence server (PS1) via an XML document management server (XDMS1).

3. A method as claimed in claim 1 or 2, **characterized in that** it comprises transmitting the notification message from the first presence server (PS1) to the second user terminal (UE2) in order to inform the user of the second user terminal (UE2) that presence status history data on the first user terminal (UE1) is available to be fetched by the second user terminal (UE2) from the network apparatus (FS1) based on a unified resource identifier URI maintained for the first user terminal (UE1).

4. A method as claimed in claim 1, 2 or 3, **characterized in that** it comprises transmitting the notification message to the second user terminal (UE2) via a second presence server (PS2).

5. A method as claimed in claim 1 or 2, **characterized in that** in response to recognizing, in the first user terminal (UE1), a predetermined presence-related action carried out by the user of the first user terminal (UE1), the method comprises
transmitting, a respective instant messaging message, short message service message, or email message from the first user terminal (UE1) to the second user terminal (UE2) in order to inform the user of the second user terminal (UE2) that presence status history data on the first user terminal (UE1) is available to be fetched by the second user terminal (UE2) from the network apparatus (FS1) based on a unified resource identifier URI maintained for the first user terminal (UE1).

6. A method as claimed in claim 1, **characterized in that** it comprises
receiving, in an XML document management server (XDMS1) of a first operator's network from the network apparatus (FS1), a create document message (3-1) regarding the first user terminal (UE1);
based on the received create document message, creating, in the XML document management server (XDMS1), an XML document for the first user terminal (UE1), the created XML document having a unified resource locator URL;
receiving, in the XML document management server (XDMS1) from the network apparatus (FS1), an update presence message (3-2);
based on the received update presence message (3-2), forwarding the update presence message (3-2) from the XML document management server (XDMS1) to a first presence server (PS1), the forwarded update presence message (3-2) including the unified resource locator address of the created XML document for the first user terminal (UE1).

7. A method as claimed in claim 6, **characterized in that** the get feed message is transmitted based on said uniform resource locator URL.

8. A method as claimed in claim 2, 3, 4 or 5, **characterized in that** the method comprises transmitting, from the second user terminal (UE2) to the XML document management server (XDMS1), a get feed message (3-12) for requesting information on the presence history of the first user terminal (UE1), wherein the get feed message is transmitted based on said uniform resource identifier URI.

9. A method as claimed in any of the preceding claims 1 to 8, **characterized in that** in response to receiving (4-5) the get feed message transmitted from the second user terminal (UE2), the method comprises transmitting (4-6), from the network apparatus (FS1) to the second user terminal (UE2), information on the presence history of the first user terminal (UE1), relating to the certain topic.

10. A communications system comprising a network apparatus (FS1), **characterized in that** the system is configured to
maintain presence status history data for the first user terminal (UE1);
in response to receiving, in a network apparatus (FS1) from a first presence server (PS1), information on updating of the presence status of the first user terminal (UE1), store information on the updated presence status to the presence status history data maintained in the network apparatus (FS1) for the first user terminal (UE1);
transmit, from the first presence server (PS1), a notification message for informing at least one second user terminal (UE2) that presence status history data on the first user terminal (UE1) is available to be fetched by the second user terminal (UE2) from the network apparatus (FS1);
receive, in the network apparatus (FS1) from the second user terminal (UE2), a get feed message requesting information on the presence history of the first user terminal (UE1), the get feed message having been transmitted from the second user terminal based on the notification message, the get feed message requesting information on history data items related to a certain topic.

11. A system as claimed in claim 10, **characterized in that** it is configured to
create and maintain, in the network apparatus (FS1), a unified resource identifier URI for the first user terminal (UE1); and
add the unified resource identifier URI maintained for the first user terminal (UE1) to a first user terminal's presence document by transmitting a update presence message from the network apparatus (FS1) to the first presence server (PS1) via an XML document management server (XDMS1).

12. A system as claimed in claim 11, **characterized in that** it is configured to transmit the notification message from the first presence server (PS1) to the second user terminal (UE2) in order to inform the user of the second user terminal (UE2) that presence status history data on the first user terminal (UE1) is available to be fetched by the second user terminal (UE2) from the network apparatus (FS1) based on the unified resource identifier URI maintained for the first user terminal (UE1).

13. A system as claimed in claim 12, **characterized in that** in response to recognizing, in the first user terminal (UE1), a predetermined presence-related action carried out by the user of the first user terminal (UE1), the system is configured to
transmit, a respective instant messaging message, short message service message, or email message from the first user terminal (UE1) to the second user terminal (UE2) in order to inform the user of the second user terminal (UE2) that presence status history data on the first user terminal (UE1) is available to be fetched by the second user terminal (UE2) from the network apparatus (FS1) based on the unified resource identifier URI maintained for the first user terminal (UE1).

14. A system as claimed in any of claims 10 to 13, **characterized in that** in response to receiving information on an update in the presence status of the first user terminal (UE1), the system is configured to transmit an update message from the first presence server to the network apparatus (FS1).

15. A system as claimed in claim 10, **characterized in that** it is configured to
receive, in an XML document management server (XDMS1) of a first operator's network from the network apparatus (FS1), a create document message regarding the first user terminal (UE1);
based on the received create document message, create an XML document for the first user terminal (UE1), the created XML document having a unified resource locator URL address;
receive, in the XML document management server (XDMS1) from the network apparatus (FS1), an update presence message;
based on the received update presence message, forward the update presence message from the XML document management server (XDMS1) to a first presence server (PS1), the forwarded update presence message including the unified resource locator URL address of the XML document created for the first user terminal (UE1).

16. A system as claimed in claim 10 or 15, **characterized in that** in response to receiving information on an update in the presence status of the first user terminal (UE1), the system is configured to transmit an update message from a first presence server to the XML document management server via the network apparatus (FS1).

17. A system as claimed in claim 16, **characterized in that** in response to receiving, in the network apparatus (FS1), the update message the system is configured to store information on the update of the first user terminal's (UE1) presence status to the presence status history data maintained in the network apparatus (FS1) for the first user terminal (UE1).

18. A system as claimed in any of claims 10 to 17, **characterized in that** in response to receiving a get feed message transmitted from the second user terminal (UE2), the system is configured to transmit, from the network apparatus (FS1) to the second user terminal (UE2), information on the presence history of the first user terminal (UE1), relating to the certain topic.

19. An apparatus (FS1) for a communications system (S), **characterized in that** it is configured to
maintain presence status history data for the first user terminal (UE1);
in response to receiving, in the apparatus (FS1) from a first presence server (PS1), information on updating of the presence status of the first user terminal (UE1), store information on the updated presence status to the presence status history data maintained in the apparatus (FS1) for the first user terminal (UE1);
receive, from a second user terminal (UE2), a get feed message requesting information on the presence history of the first user terminal (UE1), the get feed message having been transmitted from the second user terminal (UE2) based on a notification message transmitted from the first presence server (PS1) for informing the second user terminal (UE2) that presence status history data on the first user terminal (UE1) is available to be fetched by the second user terminal (UE2) from the apparatus (FS1), the get feed message requesting information on history data items related to a certain topic.

20. An apparatus as claimed in claim 19, **characterized in that** it comprises
create and maintain a unified resource identifier URI for the first user terminal (UE1), the identifier identifying the apparatus; and
add the unified resource identifier URI maintained for the first user terminal (UE1) to the first user terminal's presence document by transmitting a update presence message from the network apparatus (FS1) to a first presence server (PS1) via an XML document management server (XDMS1).

21. An apparatus as claimed in claim 19 or 20, **characterized in that** it comprises a feed server (FS1) of a first operator's network.

22. An apparatus as claimed in any of claims 19 to 21, **characterized in that** in response to receiving a get feed message transmitted from the second user terminal (UE2), the apparatus is configured to transmit, to the second user terminal (UE2), information on the presence history of the first user terminal (UE1), relating to the certain topic.

## Patentansprüche

1. Verfahren zum Verwalten von Anwesenheitsinformationen über den Nutzer eines ersten Nutzergerätes (UE1) in einem Kommunikationssystem (S), das eine Netzwerkvorrichtung (FS1) umfasst, **gekennzeichnet durch**
Verwalten (4-1), in der Netzwerkvorrichtung (FS1), von Anwesenheitsstatus-Verlaufsdaten für das erste Nutzergerät (UE1);
in Reaktion auf das Empfangen (4-3), in der Netzwerkvorrichtung (FS1) von einem ersten Anwesenheitsserver (PS1), von Informationen über das Aktualisieren des Anwesenheitsstatus des ersten Nutzergerätes (UE1), Speichern (4-4) von Informationen über den aktualisierten Anwesenheitsstatus zu den Anwesenheitsstatus-Verlaufsdaten, die in der Netzwerkvorrichtung (FS1) für das erste Nutzergerät (UE1) verwaltet werden;
Empfangen (4-5), in der Netzwerkvorrichtung (FS1) von einem zweiten Nutzergerät (UE2), einer Datenstromerhalten-Nachricht, die Informationen über den Anwesenheitsverlauf des ersten Nutzergerätes (UE1) anfordert, wobei die Datenstrom-erhalten-Nachricht von dem zweiten Nutzergerät auf der Basis einer Benachrichtigungsmitteilung gesendet wurde, die von dem ersten Anwesenheitsserver (PS1) gesendet wurde, um das zweite Nutzergerät (UE2) zu informieren, dass Anwesenheitsstatus-Verlaufsdaten über das erste Nutzergerät (UE1) verfügbar sind und **durch** das zweite Nutzergerät (UE2) aus der Netzwerkvorrichtung (FS1) abgeholt werden können, wobei die Datenstrom-erhalten-Nachricht Informationen über Verlaufsdateneinzelheiten in Bezug auf ein bestimmtes Thema anfordert.

2. Verfahren nach Anspruch 1, **dadurch gekennzeichnet, dass** es Folgendes umfasst:
Erstellen und Verwalten, in der Netzwerkvorrichtung (FS1), eines einheitlichen Ressourcenidentifikators URI für das erste Nutzergerät (UE1); und
Hinzufügen des für das erste Nutzergerät (UE1) verwalteten einheitlichen Ressourcenidentifikators URI zu dem Anwesenheitsdokument eines ersten Nutzergerätes durch Senden einer Anwesenheit-aktualisieren-Nachricht (4-2) von der Netzwerkvorrichtung (FS1) an den ersten Anwesenheitsserver (PS1) über einen XML-Dokumentenmanagementserver (XDMS1).

3. Verfahren nach Anspruch 1 oder 2, **dadurch gekennzeichnet, dass** es umfasst, die Benachrichtigungsmitteilung von dem ersten Anwesenheitsserver (PS1) an das zweite Nutzergerät (UE2) zu senden, um den Nutzer des zweiten Nutzergerätes (UE2) zu informieren, dass Anwesenheitsstatus-Verlaufsdaten über das erste Nutzergerät (UE1) verfügbar sind und durch das zweite Nutzergerät (UE2) auf der Basis eines für das erste Nutzergerät (UE1) verwalteten einheitlichen Ressourcenidentifikators URI aus der Netzwerkvorrichtung (FS1) abgeholt werden können.

4. Verfahren nach Anspruch 1, 2 oder 3, **dadurch gekennzeichnet, dass** es umfasst, die Benachrichtigungsmitteilung an das zweite Nutzergerät (UE2) über einen zweiten Anwesenheitsserver (PS2) zu senden.

5. Verfahren nach Anspruch 1 oder 2, **dadurch gekennzeichnet, dass** in Reaktion auf das Erkennen, in dem ersten Nutzergerät (UE1), einer zuvor festgelegten anwesenheitsbezogenen Aktion, die durch den Nutzer des ersten Nutzergerätes (UE1) ausgeführt wird, wobei das Verfahren Folgendes umfasst:
Senden einer Instant-Messaging-Nachricht, einer Short-Message-Service-Nachricht bzw. einer E-Mail-Nachricht von dem ersten Nutzergerät (UE1) an das zweite Nutzergerät (UE2), um den Nutzer des zweiten Nutzergerätes (UE2) zu informieren, dass Anwesenheitsstatus-Verlaufsdaten über das erste Nutzergerät (UE1) verfügbar sind und durch das zweite Nutzergerät (UE2) auf der Basis eines für das erste Nutzergerät (UE1) verwalteten einheitlichen Ressourcenidentifikators URI aus der Netzwerkvorrichtung (FS1) abgeholt werden können.

6. Verfahren nach Anspruch 1, **dadurch gekennzeichnet, dass** es Folgendes umfasst:
Empfangen, in einem XML-Dokumentenmanagementserver (XDMS1) eines Netzwerks eines ersten Betreibers von der Netzwerkvorrichtung (FS1), einer Dokumenterstellen-Nachricht (3-1) bezüglich des ersten Nutzergerätes (UE1);
auf der Basis der empfangenen Dokument-erstellen-Nachricht, Erstellen, in dem XML-Dokumentenmanagementserver (XDMS1), eines XML-Dokuments für das erste Nutzergerät (UE1), wobei das erstellte XML-Dokument einen einheitlichen Ressourcenlokator URL hat;
Empfangen, in dem XML-Dokumentenmanagementserver (XDMS1) von der Netzwerkvorrichtung (FS1), einer Anwesenheit-aktualisieren-Nachricht (3-2);
auf der Basis der empfangenen Anwesenheit-aktualisieren-Nachricht (3-2), Weiterleiten der Anwesenheit-aktualisieren-Nachricht (3-2) von dem XML-Dokumentenmanagementserver (XDMS1) zu einem ersten Anwesenheitsserver (PS1), wobei die weitergeleitete Anwesenheit-aktualisieren-Nachricht (3-2) die Adresse des einheitlichen Ressourcenlokators des erstellten XML-Dokuments für das erste Nutzergerät (UE1) enthält.

7. Verfahren nach Anspruch 6, **dadurch gekennzeichnet, dass** die Datenstrom-erhalten-Nachricht auf der Basis des einheitlichen Ressourcenlokators URL gesendet wird.

8. Verfahren nach Anspruch 2, 3, 4 oder 5, **dadurch gekennzeichnet, dass** das Verfahren umfasst, von dem zweiten Nutzergerät (UE2) an den XML-Dokumentenmanagementserver (XDMS1) eine Datenstromerhalten-Nachricht (3-12) zu senden, um Informationen über den Anwesenheitsverlauf des ersten Nutzergerätes (UE1) anzufordern, wobei die Datenstrom-erhalten-Nachricht auf der Basis des einheitlichen Ressourcenidentifikators URI gesendet wird.

9. Verfahren nach einem der vorangehenden Ansprüche 1 bis 8, **dadurch gekennzeichnet, dass** - in Reaktion auf das Empfangen (4-5) der von dem zweiten Nutzergerät (UE2) gesendeten Datenstrom-erhalten-Nachricht - das Verfahren umfasst, von der Netzwerkvorrichtung (FS1) an das zweite Nutzergerät (UE2) Informationen über den Anwesenheitsverlauf des ersten Nutzergerätes (UE1) bezüglich eines bestimmten Themas zu senden (4-6).

10. Kommunikationssystem, das eine Netzwerkvorrichtung (FS1) umfasst, **dadurch gekennzeichnet, dass** das System für Folgendes konfiguriert ist:
Verwalten von Anwesenheitsstatus-Verlaufsdaten für das erste Nutzergerät (UE1);
in Reaktion auf das Empfangen - in einer Netzwerkvorrichtung (FS1) von einem ersten Anwesenheitsserver (PS1) - von Informationen über das Aktualisieren des Anwesenheitsstatus des ersten Nutzergerätes (UE1), Speichern von Informationen über den aktualisierten Anwesenheitsstatus zu den Anwesenheitsstatus-Verlaufsdaten, die in der Netzwerkvorrichtung (FS1) für das erste Nutzergerät (UE1) verwaltet werden;
Senden, von dem ersten Anwesenheitsserver (PS1), einer Benachrichtigungsmitteilung zum Informieren mindestens eines zweiten Nutzergerätes (UE2), dass Anwesenheitsstatus-Verlaufsdaten über das erste Nutzergerät (UE1) verfügbar sind und durch das zweite Nutzergerät (UE2) aus der Netzwerkvorrichtung (FS1) abgeholt werden können;
Empfangen, in der Netzwerkvorrichtung (FS1) von dem zweiten Nutzergerät (UE2), einer Datenstrom-erhalten-Nachricht, die Informationen über den Anwesenheitsverlauf des ersten Nutzergerätes (UE1) anfordert, wobei die Datenstrom-erhalten-Nachricht von dem zweiten Nutzergerät auf der Basis der Benachrichtigungsmitteilung gesendet wurde, wobei die Datenstrom-erhalten-Nachricht Informationen über Verlaufsdateneinzelheiten in Bezug auf ein bestimmtes Thema anfordert.

11. System nach Anspruch 10, **dadurch gekennzeichnet, dass** es für Folgendes konfiguriert ist:
Erstellen und Verwalten, in der Netzwerkvorrichtung (FS1), eines einheitlichen Ressourcenidentifikators URI für das erste Nutzergerät (UE1); und
Hinzufügen des für das erste Nutzergerät (UE1) verwalteten einheitlichen Ressourcenidentifikators URI zu dem Anwesenheitsdokument eines ersten Nutzergerätes durch Senden einer Anwesenheit-aktualisieren-Nachricht von der Netzwerkvorrichtung (FS1) zu dem ersten Anwesenheitsserver (PS1) über einen XML-Dokumentenmanagementserver (XDMS1).

12. System nach Anspruch 11, **dadurch gekennzeichnet, dass** es dafür konfiguriert ist, die Benachrichtigungsmitteilung von dem ersten Anwesenheitsserver (PS1) an das zweite Nutzergerät (UE2) zu senden, um den Nutzer des zweiten Nutzergerätes (UE2) zu informieren, dass Anwesenheitsstatus-Verlaufsdaten über das erste Nutzergerät (UE1) verfügbar sind und durch das zweite Nutzergerät (UE2) auf der Basis des für das erste Nutzergerät (UE1) verwalteten einheitlichen Ressourcenidentifikators URI aus der Netzwerkvorrichtung (FS1) abgeholt werden können.

13. System nach Anspruch 12, **dadurch gekennzeichnet, dass** in Reaktion auf das Erkennen - in dem ersten Nutzergerät (UE1) - einer zuvor festgelegten anwesenheitsbezogenen Aktion, die durch den Nutzer des ersten Nutzergerätes (UE1) ausgeführt wird, das System für Folgendes konfiguriert ist:
Senden einer Instant-Messaging-Nachricht, einer Short-Message-Service-Nachricht bzw. einer E-Mail-Nachricht von dem ersten Nutzergerät (UE1) an das zweite Nutzergerät (UE2), um den Nutzer des zweiten Nutzergerät (UE2) zu informieren, dass Anwesenheitsstatus-Verlaufsdaten über das erste Nutzergerät (UE1) verfügbar sind und auf der Basis des für das erste Nutzergerät (UE1) verwalteten einheitlichen Ressourcenidentifikators URI durch das zweite Nutzergerät (UE2) aus der Netzwerkvorrichtung (FS1) abgeholt werden können.

14. System nach einem der Ansprüche 10 bis 13, **dadurch gekennzeichnet, dass** - in Reaktion auf das Empfangen von Informationen über eine Aktualisierung des Anwesenheitsstatus des ersten Nutzergerätes (UE1) - das System dafür konfiguriert ist, eine Aktualisierungsnachricht von dem ersten Anwesenheitsserver an die Netzwerkvorrichtung (FS1) zu senden.

15. System nach Anspruch 10, **dadurch gekennzeichnet, dass** es für Folgendes konfiguriert ist:
Empfangen, in einem XML-Dokumentenmanagementserver (XDMS1) eines Netzwerks eines ersten Betreibers von der Netzwerkvorrichtung (FS1), einer Dokumenterstellen-Nachricht bezüglich des ersten Nutzergerätes (UE1);
auf der Basis der empfangenen Dokument-erstellen-Nachricht, Erstellen eines XML-Dokuments für das erste Nutzergerät (UE1), wobei das erstellte XML-Dokument eine Adresse eines einheitlichen Ressourcenlokators URL hat;
Empfangen, in dem XML-Dokumentenmanagementserver (XDMS1) von der Netzwerkvorrichtung (FS1), einer Anwesenheit-aktualisieren-Nachricht;
auf der Basis der empfangenen Anwesenheit-aktualisieren-Nachricht, Weiterleiten der Anwesenheit-aktualisieren-Nachricht von dem XML-Dokumentenmanagementserver (XDMS1) zu einem ersten Anwesenheitsserver (PS1), wobei die weitergeleitete Anwesenheit-aktualisieren-Nachricht die Adresse des einheitlichen Ressourcenlokators URL des für das erste Nutzergerät (UE1) erstellten XML-Dokuments enthält.

16. System nach Anspruch 10 oder 15, **dadurch gekennzeichnet, dass** - in Reaktion auf das Empfangen von Informationen über eine Aktualisierung des Anwesenheitsstatus des ersten Nutzergerätes (UE1) - das System dafür konfiguriert ist, eine Aktualisierungsnachricht von einem ersten Anwesenheitsserver an den XML-Dokumentenmanagementserver über die Netzwerkvorrichtung (FS1) zu senden.

17. System nach Anspruch 16, **dadurch gekennzeichnet, dass** - in Reaktion auf das Empfangen der Aktualisierungsnachricht in der Netzwerkvorrichtung (FS1) - das System dafür konfiguriert ist, Informationen über die Aktualisierung des Anwesenheitsstatus des ersten Nutzergerätes (UE1) zu den in der Netzwerkvorrichtung (FS1) für das erste Nutzergerät (UE1) verwalteten Anwesenheitsstatus-Verlaufsdaten zu speichern.

18. System nach einem der Ansprüche 10 bis 17, **dadurch gekennzeichnet, dass** - in Reaktion auf das Empfangen einer von dem zweiten Nutzergerät (UE2) gesendeten Datenstrom-erhalten-Nachricht - das System dafür konfiguriert ist, von der Netzwerkvorrichtung (FS1) an das zweite Nutzergerät (UE2) Informationen über den Anwesenheitsverlauf des ersten Nutzergerätes (UE1) bezüglich eines bestimmten Themas zu senden.

19. Vorrichtung (FS1) für ein Kommunikationssystem (S), **dadurch gekennzeichnet, dass** es für Folgendes konfiguriert ist:
Verwalten von Anwesenheitsstatus-Verlaufsdaten für das erste Nutzergerät (UE1);
in Reaktion auf das Empfangen - in der Vorrichtung (FS1) von einem ersten Anwesenheitsserver (PS1) - von Informationen über das Aktualisieren des Anwesenheitsstatus des ersten Nutzergerätes (UE1), Speichern von Informationen über den aktualisierten Anwesenheitsstatus zu den in der Vorrichtung (FS1) für das erste Nutzergerät (UE1) verwalteten Anwesenheitsstatus-Verlaufsdaten;
Empfangen, von einem zweiten Nutzergerät (UE2), einer Datenstrom-erhalten-Nachricht, die Informationen über den Anwesenheitsverlauf des ersten Nutzergerätes (UE1) anfordert, wobei die Datenstrom-erhalten-Nachricht von dem zweiten Nutzergerät (UE2) auf der Basis einer Benachrichtigungsmitteilung gesendet wurde, die von dem ersten Anwesenheitsserver (PS1) gesendet wurde, um das zweite Nutzergerät (UE2) zu informieren, dass Anwesenheitsstatus-Verlaufsdaten über das erste Nutzergerät (UE1) verfügbar sind und durch das zweite Nutzergerät (UE2) aus der Vorrichtung (FS1) abgeholt werden können, wobei die Datenstrom-erhalten-Nachricht Informationen über Verlaufsdateneinzelheiten in Bezug auf ein bestimmtes Thema anfordert.

20. Vorrichtung nach Anspruch 19, **dadurch gekennzeichnet, dass** sie Folgendes umfasst:
Erstellen und Verwalten eines einheitlichen Ressourcenidentifikators URI für das erste Nutzergerät (UE1), wobei der Identifikator die Vorrichtung identifiziert; und
Hinzufügen des für das erste Nutzergerät (UE1) verwalteten einheitlichen Ressourcenidentifikators URI zu dem Anwesenheitsdokument des ersten Nutzergerätes durch Senden einer Anwesenheit-aktualisieren-Nachricht von der Netzwerkvorrichtung (FS1) zu einem ersten Anwesenheitsserver (PS1) über einen XML-Dokumentenmanagementserver (XDMS1).

21. Vorrichtung nach Anspruch 19 oder 20, **dadurch gekennzeichnet, dass** sie einen Datenstromserver (FS1) des Netzwerks eines ersten Betreibers umfasst.

22. Vorrichtung nach einem der Ansprüche 19 bis 21, **dadurch gekennzeichnet, dass** - in Reaktion auf das Empfangen einer von dem zweiten Nutzergerät (UE2) gesendeten Datenstrom-erhalten-Nachricht - die Vorrichtung dafür konfiguriert ist, an das zweite Nutzergerät (UE2) Informationen über den Anwesenheitsverlauf des ersten Nutzergerätes (UE1) bezüglich eines bestimmten Themas zu senden.

## Revendications

1. Procédé de maintien d'informations de présence concernant l'utilisateur d'un premier terminal utilisateur (UE1) dans un système de communications (S) comprenant un appareil de réseau (FS1), **caractérisé par**
le maintien (4-1), dans l'appareil de réseau (FS1), de données d'historique d'état de présence pour le premier terminal utilisateur (UE1) ;
en réponse à la réception (4-3), dans l'appareil de réseau (FS1) en provenance d'un premier serveur de présence (PS1), d'informations concernant la mise à jour de l'état de présence du premier terminal utilisateur (UE1), le stockage (4-4) d'informations concernant l'état de présence mis à jour dans les données d'historique d'état de présence maintenues dans l'appareil de réseau (FS1) pour le premier terminal utilisateur (UE1) ;
la réception (4-5), dans l'appareil de réseau (FS1) en provenance d'un second terminal utilisateur (UE2), d'un message d'obtention de source demandant des informations concernant l'historique de présence du premier terminal utilisateur (UE1), le message d'obtention d'alimentation ayant été transmis en provenance du second terminal utilisateur en se basant sur un message de notification transmis en provenance du premier serveur de présence (PS1) pour informer le second terminal utilisateur (UE2) que des données d'historique d'état de présence concernant le premier terminal utilisateur (UE1) sont disponibles pour que le second terminal utilisateur (UE2) aille les chercher à partir de l'appareil de réseau (FS1), le message d'obtention de source demandant des informations concernant des éléments de données d'historique liés à un certain sujet.

2. Procédé selon la revendication 1, **caractérisé en ce qu'**il comprend
la création et le maintien, dans l'appareil de réseau (FS1), d'un identificateur de ressource unifiée URI pour le premier terminal utilisateur (UE1) ; et
l'ajout de l'identificateur de ressource unifiée URI maintenu pour le premier terminal utilisateur (UE1) à un premier document de présence de terminal d'utilisateur en transmettant un message de présence de mise à jour (4-2) en provenance de l'appareil de réseau (FS1) à destination du premier serveur de présence (PS1) via un serveur de gestion de document XML (XDMS1).

3. Procédé selon la revendication 1 ou 2, **caractérisé en ce qu'**il comprend la transmission du message de notification du premier serveur de présence (PS1) au second terminal utilisateur (UE2) pour informer l'utilisateur du second terminal utilisateur (UE2) que des données d'historique d'état de présence concernant le premier terminal utilisateur (UE1) sont disponibles pour que le second terminal utilisateur (UE2) aille les chercher à partir de l'appareil de réseau (FS1) sur la base d'un identificateur de ressource unifiée URI maintenu pour le premier terminal utilisateur (UE1).

4. Procédé selon la revendication 1, 2 ou 3, **caractérisé en ce qu'**il comprend la transmission du message de notification au second terminal utilisateur (UE2) via un second serveur de présence (PS2).

5. Procédé selon la revendication 1 ou 2, **caractérisé en ce qu'**en réponse à la reconnaissance, dans le premier terminal utilisateur (UE1), d'une action concernant la présence prédéterminée effectuée par l'utilisateur du premier terminal utilisateur (UE1), le procédé comprend
la transmission, d'un message respectif de messagerie instantanée, d'un message sms, ou d'un message électronique en provenance du premier terminal utilisateur (UE1) à destination du second terminal utilisateur (UE2) afin d'informer l'utilisateur du second terminal utilisateur (UE2) que des données d'historique d'état de présence concernant le premier terminal utilisateur (UE1) sont disponibles pour que le second terminal utilisateur (UE2) aille les chercher à partir de l'appareil de réseau (FS1) sur la base d'un identificateur de ressource unifiée URI maintenu pour le premier terminal utilisateur (UE1).

6. Procédé selon la revendication 1, **caractérisé en ce qu'**il comprend
la réception, dans un serveur de gestion de document XML (XDMS1) du réseau d'un premier opérateur en provenance de l'appareil de réseau (FS1), d'un message (3-1) de création de document concernant le premier terminal utilisateur (UE1) ;
sur la base du message de création de document reçu, la création, dans le serveur de gestion de document XML (XDMS1), d'un document XML pour le premier terminal utilisateur (UE1), le document XML créé ayant une adresse universelle URL ;
la réception, dans le serveur de gestion de document XML (XDMS1) en provenance de l'appareil de réseau (FS1), d'un message de présence de mise à jour (3-2) ;
sur la base du message de présence de mise à jour reçu (3-2), l'expédition du message de présence de mise à jour (3-2) depuis le serveur de gestion de document XML (XDMS1) à destination d'un premier serveur de présence (PS1), le message de présence de mise à jour expédié (3-2) incluant l'adresse universelle du document XML créé pour le premier terminal utilisateur (UE1).

7. Procédé selon la revendication 6, **caractérisé en ce que** le message d'obtention de source est transmis sur la base de ladite adresse universelle URL.

8. Procédé selon la revendication 2, 3, 4 ou 5, **caractérisé en ce que** le procédé comprend la transmission, en provenance du second terminal utilisateur (UE2) à destination du serveur de gestion de document XML (XDMS1), d'un message d'obtention d'alimentation (3-12) pour demander des informations concernant l'historique de présence du premier terminal utilisateur (UE1), dans lequel le message d'obtention de source est transmis sur la base dudit identificateur de ressource uniforme URI.

9. Procédé selon n'importe laquelle des revendications précédentes 1 à 8, **caractérisé en ce qu'**en réponse à la réception du message d'obtention de source (4-5) transmis en provenance du second terminal utilisateur (UE2), le procédé comprend la transmission (4-6), en provenance de l'appareil de réseau (FS1) à destination du second terminal utilisateur (UE2), d'informations concernant l'historique de présence du premier terminal utilisateur (UE1), se rapportant au certain sujet.

10. Système de communications comprenant un appareil de réseau (FS1), **caractérisé en ce que** le système est configuré pour
maintenir des données d'historique d'état de présence pour le premier terminal utilisateur (UE1) ;
en réponse à la réception, dans un appareil de réseau (FS1) en provenance d'un premier serveur de présence (PS1), d'informations concernant la mise à jour de l'état de présence du premier terminal utilisateur (UE1), stocker des informations concernant l'état de présence mis à jour dans les données d'historique d'état de présence maintenues dans l'appareil de réseau (FS1) pour le premier terminal utilisateur (UE1) ;
transmettre, en provenance du premier serveur de présence (PS1), un message de notification pour informer au moins un second terminal utilisateur (UE2) que des données d'historique d'état de présence concernant le premier terminal utilisateur (UE1) sont disponibles pour que le second terminal utilisateur (UE2) aille les chercher en provenance de l'appareil de réseau (FS1) ;
recevoir, dans l'appareil de réseau (FS1) en provenance du second terminal utilisateur (UE2), un message d'obtention de source demandant des informations concernant l'historique de présence du premier terminal utilisateur (UE1), le message d'obtention de source ayant été transmis en provenance du second terminal utilisateur sur la base du message de notification, le message d'obtention de source demandant des informations concernant des éléments de données d'historique liées à un certain sujet.

11. Système selon la revendication 10, **caractérisé en ce qu'**il est configuré pour
créer et maintenir, dans l'appareil de réseau (FS1), un identificateur de ressource unifiée URI pour le premier terminal utilisateur (UE1) ; et
ajouter l'identificateur de ressource unifiée URI maintenu pour le premier terminal utilisateur (UE1) à un document de présence de premier terminal utilisateur en transmettant un message de présence de mise à jour en provenance de l'appareil de réseau (FS1) à destination du premier serveur de présence (PS1) via un serveur de gestion de document XML (XDMS1).

12. Système selon la revendication 11, **caractérisé en ce qu'**il est configuré pour transmettre le message de notification en provenance du premier serveur de présence (PS1) à destination du second terminal utilisateur (UE2) afin d'informer l'utilisateur du second terminal utilisateur (UE2) que des données d'historique d'état de présence concernant le premier terminal utilisateur (UE1) sont disponibles pour que le second terminal utilisateur (UE2) aille les chercher en provenance de l'appareil de réseau (FS1) sur la base de l'identificateur de ressource unifiée URI maintenu pour le premier terminal utilisateur (UE1).

13. Système selon la revendication 12, **caractérisé en ce qu'**en réponse à la reconnaissance, dans le premier terminal utilisateur (UE1), d'une action concernant la présence prédéterminée effectuée par l'utilisateur du premier terminal utilisateur (UE1), le système est configuré pour
transmettre, un message respectif de messagerie instantanée, un message sms, ou un message électronique en provenance du premier terminal utilisateur (UE1) à destination du second terminal utilisateur (UE2) afin d'informer l'utilisateur du second terminal utilisateur (UE2) que des données d'historique d'état de présence concernant le premier terminal utilisateur (UE1) sont disponibles pour que le second terminal utilisateur (UE2) aille les chercher en provenance de l'appareil de réseau (FS1) sur la base de l'identificateur de ressource unifiée URI maintenu pour le premier terminal utilisateur (UE1).

14. Système selon n'importe laquelle des revendications 10 à 13, **caractérisé en ce qu'**en réponse à la réception d'informations concernant une mise à jour dans l'état de présence du premier terminal utilisateur (UE1), le système est configuré pour transmettre un message de mise à jour en provenance du premier serveur de présence à destination de l'appareil de réseau (FS1).

15. Système selon la revendication 10, **caractérisé en ce qu'**il est configuré pour
recevoir, dans un serveur de gestion de document XML (XDMS1) du réseau d'un premier opérateur en provenance de l'appareil de réseau (FS1), un message de création de document concernant le premier terminal utilisateur (UE1) ;
sur la base du message de création de document reçu, créer un document XML pour le premier terminal utilisateur (UE1), le document XML créé ayant une adresse universelle URL ;
recevoir, dans le serveur de gestion de document XML (XDMS1) en provenance de l'appareil de réseau (FS1), un message de présence de mise à jour ;
sur la base du message de présence de mise à jour reçu, expédier le message de présence de mise à jour en provenance du serveur de gestion de document XML (XDMS1) à un premier serveur de présence (PS1), le message de présence de mise à jour expédié incluant l'adresse universelle URL du document XML créé pour le premier terminal utilisateur (UE1).

16. Système selon la revendication 10 ou 15, **caractérisé en ce qu'**en réponse à la réception d'informations concernant une mise à jour dans l'état de présence du premier terminal utilisateur (UE1), le système est configuré pour transmettre un message de mise à jour en provenance d'un premier serveur de présence au serveur de gestion de document XML via l'appareil de réseau (FS1).

17. Système selon la revendication 16, **caractérisé en ce qu'**en réponse à la réception, dans l'appareil de réseau (FS1), du message de mise à jour le système est configuré pour stocker des informations concernant la mise à jour de l'état de présence du premier terminal utilisateur (UE1) dans les données d'historique d'état de présence maintenues dans l'appareil de réseau (FS1) pour le premier terminal utilisateur (UE1).

18. Système selon n'importe laquelle des revendications 10 à 17, **caractérisé en ce qu'**en réponse à la réception d'un message d'obtention de source transmis en provenance du second terminal utilisateur (UE2), le système est configuré pour transmettre, en provenance de l'appareil de réseau (FS1) à destination du second terminal utilisateur (UE2), des informations concernant l'historique de présence du premier terminal utilisateur (UE1), se rapportant au certain sujet.

19. Appareil (FS1) pour un système de communications (S), **caractérisé en ce qu'**il est configuré pour
maintenir des données d'historique d'état de présence pour le premier terminal utilisateur (UE1) ;
en réponse à la réception, dans l'appareil (FS1) en provenance d'un premier serveur de présence (PS1), d'informations concernant la mise à jour de l'état de présence du premier terminal utilisateur (UE1), stocker des informations concernant l'état de présence mis à jour dans les données d'historique d'état de présence maintenues dans l'appareil (FS1) pour le premier terminal utilisateur (UE1) ;
recevoir, en provenance d'un second terminal utilisateur (UE2), un message d'obtention de source demandant des informations concernant l'historique de présence du premier terminal utilisateur (UE1), le message d'obtention de source ayant été transmis en provenance du second terminal utilisateur (UE2) sur la base d'un message de notification transmis à partir du premier serveur de présence (PS1) pour informer le second terminal utilisateur (UE2) que les données d'historique d'état de présence concernant le premier terminal utilisateur (UE1) sont disponibles pour que le second terminal utilisateur (UE2) aille les chercher à partir de l'appareil (FS1), le message d'obtention de source demandant des informations concernant des éléments de données d'historique liés à un certain sujet.

20. Appareil selon la revendication 19, **caractérisé en ce qu'**il comprend
la création et le maintien d'un identificateur de ressource unifiée URI pour le premier terminal utilisateur (UE1), l'identificateur identifiant l'appareil ; et
l'ajout de l'identificateur de ressource unifiée URI maintenu pour le premier terminal utilisateur (UE1) au document de présence de premier terminal utilisateur en transmettant un message de présence de mise à jour depuis l'appareil de réseau (FS1) à destination d'un premier serveur de présence (PS1) via un serveur de gestion de document XML (XDMS1).

21. Appareil selon la revendication 19 ou 20, **caractérisé en ce qu'**il comprend un serveur d'alimentation (FS1) du réseau d'un premier opérateur.

22. Appareil selon n'importe laquelle des revendications 19 à 21, **caractérisé en ce qu'**en réponse à la réception d'un message d'obtention de source transmis en provenance du second terminal utilisateur (UE2), l'appareil est configuré pour transmettre, au second terminal utilisateur (UE2), des informations concernant l'historique de présence du premier terminal utilisateur (UE1), se rapportant au certain sujet.
